# EUROPÄISCHE PATENTSCHRIFT

(11) **EP 1 256 667 B1**
(45) Veröffentlichungstag und Bekanntmachung des Hinweises auf die Patenterteilung: **28.04.2004**
(21) Anmeldenummer: 02010415.4
(22) Anmeldetag: 08.05.2002
(51) Int. Cl.: E04H 1/12, B60S 3/00, E04B 1/344

(54) **Mobile Waschanlage**
Mobile wash box
Lave-voiture mobile

(30) Priorität: 12.05.2001 DE 10123321
(43) Veröffentlichungstag der Anmeldung: 13.11.2002
(73) Patentinhaber: ALTO Deutschland GmbH, 89287 Bellenberg (DE)
(72) Erfinder: Steigerwald, Frank, Dipl.-Ing., 87700 Memmingen (DE)
(74) Vertreter: Riebling, Peter, Dr.-Ing.

(56) Entgegenhaltungen:
- CH-A- 684 280
- DE-A- 2 741 552
- US-A- 5 461 832

## Beschreibung

Die vorliegende Erfindung betrifft eine Waschanlage zur Aufnahme mindestens eines Fahrzeuges, bevorzugt von Kraftfahrzeugen zu Reinigungszwecken als Zusatzpatentanmeldung zur DE 199 54 961.3-25 mit dem Titel "Mobile Waschbox" nach dem Oberbegriff des Hauptanspruchs 1.

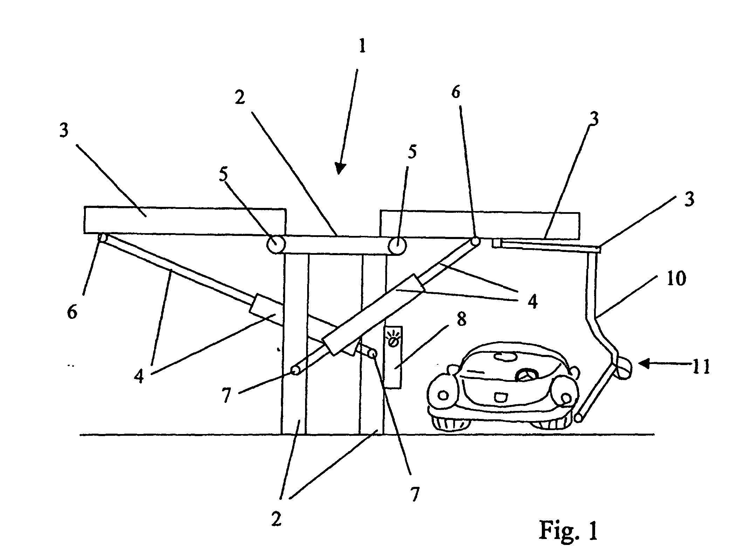

Aus dem Stand der Technik gehen die DE 27 41 552, die US 5,461,832, die CH 684 280 A2 und die der DE 27 41 552 hervor. Aus der DE 27 41 552 ist eine wegklappaber Abdeckung zum Unterstellen von Gegenständen zu entnehmen. Hierbei handelt es sich um eine Abdeckmöglichkeit, die in erster Linie für Fahrzeuge vorgesehen ist, und an einer senkrechten Aufnahmemöglichkeit befestigbar ist. Die senkrechte Aufnahmemöglichkeit kann entweder eine Mauer, eine Wand oder dgl. mehr sein. Die wegklappbare Abdeckung zu Unterstellen von Gegenständen zeichnet sich durch einen teilweise herunterklappbaren Rahmen aus, der die Kontur des untergestellten Gegenstandes teilweise umschließt und gegenunbefugtes Hochklappen sicherbar ist. Die Figuren 1 - 3 zeigen eine Vorrichtung, die eine senkrechte Fixiereinheit und eine an dieser gelagerte, zwischen einem etwa wagrechten und einem Senkrechten Zustand verschwenkbare Abdeckeinheit. Gestützt wird diese Abdeckeinheit durch Abstützelemente in der Form von Gasdruckfedern. Eine Sicherung gegen unbefugtes Hochklappen ist mittels einer Kette dargestellt, die mit einem Schloss gesichert ist. Die Abdeckung wird zum Schutz des untergestellen Fahrzeuges einfach auf dieses draufgeklappt, so dass die Abdeckung darauf aufliegt. Diese Vorrichtung dient also lediglich zum Schutz von Fahrzeugen gegen Witterung und zum Teil gegen unbefugten Zugriff auf das Fahrzeug, und ist fest an einem Ort montiert.

Die US 5,461,832 beschreibt ein transportables, faltbares Gebäude und ein Verfahren zur Aufstellung eines transportablen, faltbaren Gebäudes. Es handelt sich hierbei um eine auf einem LKW transportable, zusammengefaltete Halle. Diese wird mittels einer auf einem Anhänger angeordneten Hubeinrichtung in der Mitte von unten her angehoben, und kann alsdann mittels zusätzlichen Hilfsmitteln für den Transport zusammengeklappt werden. Das symmetrisch aufgebaute, faltbare Gebäude weist auf jeder Seite zwei gegeneinander zusammenklappbare Dachteile und ein am äußeren Dachelement ebenfalls klappbar angeordnetes Seitenelement auf, auf welchem das Gebäude auf eine entsprechend vorbereitete Grundfläche, z. B. einem Hallenboden, aufgestellt werden kann. Nach dem Aufstellen dieser Teile können stirnseitig weitere Wandelemente montiert werden, so dass das Gebäude voll geschlossen ist. es kann dann für Lager- oder andere Zwecke genutzt werden. Es handelt sich dabei aber um eine Halle oder dgl. mit deren ureigenen Eigenschaften, die durch die transportabel Bauweise beispielsweise in Fertigbauweise vorgefertigt werden kann, jedoch in ihrer Nutzung als geschlossene Halle bestimmt ist.

Die CH 684 280 A2 beschreibt eine Vorrichtung zum Schutz gegen Sonnenstrahlen und Witterung. Hierbei handelt es sich um eine Unterstellmöglichkeit für ein Fahrzeug in der Form eines sogenannten Carportes. Dieser weist zwei senkrechte Stützen auf, die auf fußartigen Sockeln aufgestellt sind. Als Abdeckung ist eine gewölbte Fläche gezeigt, die in etwa einen Kreisabschnitt in der Seitenansicht wiedergibt. Dachseitig sind gegenüber den beiden Stützen Verstrebungen dargestellt, die die Dachfläche in der Längsrichtung abstützen. Der Aufbau ist als Metallkonstruktion ausgebildet und wird als leicht zusammenbaubar beschrieben. Die Funktion wird einerseits als Schutz gegen Sonneneinstrahlung und andererseits gegen Schnee beschrieben. Eine Veränderung der Dachausrichtung ist nicht vorgesehen. Ebenfalls ist es weder möglich noch beabsichtigt diese Vorrichtung in irgend einer Weise zu verschließen. Eine transportable Eigenschaft kann nur soweit erkannt werden, dass die einzelnen Bauteile vor Ort gebracht und dort zusammengebaut werden. Ein vorgefertigter Aufbau und ein Transport in vorgefertigtem Zustand ist nicht zu erkennen.

Aus der DE 27 41 552 geht eine wegklappbare Abdeckung zum Unterstellen von Gegenständen hervor. Diese ist vorzugsweise für Kraftfahrzeuge gebildet und gekennzeichnet durch einen im teilweise heruntergeklappten Zustand die Kontur des untergestellten Gegenstandes teilweise umschließenden Rahmens, welcher gegen unbefugtes Hochklappen sicherbar ist. Hierbei handelt es sich zum einen um einen Schutz eines Gegenstandes, vorzugsweise eines Kraftfahrzeuges, im wesentlichen vor Niederschlag. Die beschriebene Abdeckung besteht im wesentlichen aus einer Abdeckhaube, welche schwenkbar an einer Wand befestigt ist, und an der von der Wandbefestigung entfernten Seite eine Möglichkeit vorhanden ist, diese Abdeckung mit dem Fahrzeug, wie beispielsweise in der Figur 2 dargestellt, mittels eine Kette und einem Vorhängeschloss am Türgriff eines dargestellten Kraftfahrzeuges zu befestigen oder zu sichern. Ein weiterer jedoch gegenüber der ersten Schutzwirkung geringer wirkender Vorteil ist dabei für das Fahrzeug durch eine Abdeckung von der Seite bzw. von vorne und von hinten her. Diese seitliche bzw. vordere und hintere Abdeckung wird durch die Schrägstellung der Abdeckhaube bzw. deren vordere und hintere Abschlusswand bewirkt.

Im Wesentlichen handelt es sich hierbei also um eine Abdeckung für ein Fahrzeug, welches wenigstens bis zu einem bestimmten Abstand zum Fahrzeug hin aus einer Ruheposition heraus abgeschwenkt werden kann, um dem Fahrzeug einen etwas besseren Schutz vor Witterung zu bieten als dieser Schutz gegeben wäre, wenn das Dach in seiner Ruhelage, etwa waagrecht, oberhalb des Fahrzeugs wäre. Ein zumindest bedenkliches Merkmal, welches aus dieser Druckschrift hervor geht, ist die Sicherung des Daches mittels einer Kette und einem Vorhängeschloss am Türgriff des Fahrzeugs. Hierbei ist bereits im Voraus vorhersehbar, dass Beschädigungen an dem Fahrzeug nahezu unvermeidlich sind. Im Weiteren gilt es an dieser Stelle anzumerken, dass diese Abdeckung in erster Linie als Schutzdach für ein Fahrzeug ausgebildet ist, mit den entsprechenden Anforderungen für die Abdeckung eines Fahrzeuges, im wesentlichen von oben her, und teilweise auch noch von der Seite und vorn der Vorder- und Rückseite des Fahrzeugs. Es handelt sich also lediglich um eine Abdeckmöglichkeit für Fahrzeuge, wobei jedoch keinerlei Verbindung zu einer Waschmöglichkeit des Fahrzeugs gegeben ist.

Die Ursprungsanmeldung der vorliegenden Erfindung, die DE 199 54 961.3-25, beschreibt jedoch eine mobile Waschbox zur Aufnahme mindestens eines Fahrzeuges zur Reinigungszwecken, bestehend aus einem Stahlgerüst aus Stahlträgern mit Wandungen, wobei auf zwei sich gegenüber liegenden Seiten des Stahlgerüstes sich Öffnungen zum Ein- und Ausfahren der Fahrzeuge vorgesehen sind, und die Waschbox nach oben hin abschließende Decke an dem Stahlgerüst derart um mindestens eine Schwenkachse schwenkbar befestigt ist, dass diese Decke der Waschbox aus einer etwa vertikalen Transportposition in eine etwa horizontale Benutzungsposition bringbar ist.

Hierbei sind bevorzugt bereits sämtliche Reinigungseinrichtungen wie Programmautomat, Lanzenköcher, Schaumbürstenwanne, Deckenkreisel, Hochdruckleitungen, Leuchtkörper, Spritzeinrichtung und Schaumbürste und eventuell auch die restliche Waschtechnik wie Wasserspeicher, Wasseraufbereitung, Heizung und Druckerzeugungseinheit vorinstalliert. Ein Vorteil dieser mobilen Waschbox ist, dass nahezu die gesamte Waschbox witterungsunabhängig in der Montagehalle vormontiert werden kann und bereits ein Funktionstest durchgeführt werden kann, danach die funktionstüchtigen, mobilen Waschboxen in Transportposition platzsparend auf einen herkömmlichen LKW verladen werden, an Ort und Stelle gefahren werden und dort auf einen vorbereiteten Fundamentboden gestellt werden, wobei dann lediglich noch das Dach in Benutzungsposition hochgeklappt werden muss. Bisher wurden die Waschboxen auf der Baustelle montiert, was zu erheblichen Kosten im Hinblick auf erhöhte Montage und Testzeiten führte.

Ein gravierender Nachteil dieser Ausführungsform liegt darin, dass nach dem Aufbau dieser Waschboxen die gesamte Konstruktion in der vorgesehenen Formgebung fest verbleibt. Dadurch sind die oben angeführten Komponenten der Waschanlage entweder seitlich und/oder an der Decke mehr oder weniger frei zugänglich. Das bedeutet, die gesamten Bedieneinheiten sind sowohl der Witterung als auch der Gefahr von Beschädigung, beispielsweise durch Vandalismus, permanent ausgesetzt. Dies gilt natürlich im speziellen für Zeiten, in denen die Waschanlagen keine Betriebszeiten haben. Also in Zeiten, in denen die Anlagen nicht zweckgemäß bereitgestellt und verwendet werden, also zu Zeiten außerhalb der Betriebszeiten.

Aufgabe der vorliegenden Erfindung ist es nun, die mobile Waschanlage mit einer Vorrichtung zu versehen, welche es ermöglicht, diese zu bestimmten, von den jeweiligen Betriebszeiten abhängigen Zeiten baulich so zu verändern, dass diese deutlich besser gegen Witterung und mutwillige Beschädigung geschützt sind.

Die Lösung der gestellten Aufgabe erfolgt durch die technische Lehre des vom unabhängigen Patentanspruch 1 der Ursprungsanmeldung DE 199 54 961.3-25 abhängigen Patentanspruch 1.

Ein wesentliches Merkmal der vorliegenden Erfindung liegt nun darin, dass die Abstützeinheiten für das Dach bzw. die Dächer der mobilen Waschanlage so veränderbar sind, dass das Dach oder die Dächer, je nach dem um welche Ausführungsform es sich handelt, bei Bedarf so weit eingeklappt werden kann, dass die gesamte Waschanlage, bestehend aus dem tragenden Abschnitt, Bodenbereich, tragende vertikale Stützeinrichtung und Dach soweit als möglich zusammengeklappt werden können, so dass sie im wesentlichen eine geschlossene Einheit bilden. Dabei können die einzelnen Bauteile so weit zusammengeklappt werden, dass sie eine komplett geschlossene Einheit bilden, wodurch weder Witterung noch Einflüsse durch mutwillige Beschädigung, im normalen Rahmen, möglich sind. Unter "normalem Rahmen" werden Beschädigungen wie sie durch die Einwirkung vom Schlägen, mit oder ohne Gegenstände oder ähnliche Beschädigungsversuche wie beispielsweise Beschädigung der Schläuche oder Waschgeräte durch Schnittwerkzeuge oder ähnlichem hervorgerufen werden verstanden. Ebenfalls verhindert oder wenigstens erschwert wird durch diese Maßnahme eine unberechtigte Zugangsmöglichkeit zur Steuerung der Anlage bzw. zu dessen Kassenautomat.

Als technische Einrichtung ist nun vorgesehen, die Stützen des Daches so auszubilden, dass diese anstelle einer starren, in ihrer Länge unveränderlichen Verbindung zwar ebenfalls feste, jedoch in ihrer Länge in einem entsprechenden Bereich variierbare Stützen ersetzt werden. Dadurch ist es möglich, das Dach gegenüber dem etwa senkrechten Bauteilen der Waschanlage so zu verschwenken, dass das Dach ebenfalls in senkrechte Richtung verschwenkt werden kann. Diese erfindungsgemäße Stützeinheit kann beispielsweise durch einen Hydraulikzylinder, eine Gewindespindel mit entsprechendem Spindelantrieb, oder eine andere, in der Wirkungsweise entsprechende Stützeinheit realisiert sein.

Vorzugsweise ist es vorgesehen, diese Stützeinheit als Hydraulikzylinder auszubilden, da bereits eine Hydraulikanlage in der Waschanlage vorhanden ist, welche zum Antrieb des Hydraulikzylinders benutzt werden kann. Auch hier wird darauf hingewiesen, dass es sich nicht um einen einzelnen Hydraulikzylinder handelt, sondern um eine entsprechende Anzahl von Hydraulikzylindern, oder auch entsprechenden anderen Antriebseinheiten wie die, bereits oben erwähnte, Antriebsart einer Gewindespindel mit entsprechendem Antrieb, je nachdem wie viele derartige Stützeinheiten jeweils für die Abstützung des Daches benötigt werden. Die Anzahl der gesamten Einheiten wird hier ohnehin nicht beschränkend angegeben, sondern lediglich sinngemäß, so dass die Funktion als solche beschrieben wird, unabhängig davon, in welcher Ausführungsform sie jeweils schlussendlich ausgebildet ist. Es können somit einfache, doppelte oder auch mehrfach mobile Waschanlagen betroffen sein, welche nun ebenfalls einseitige oder mehrseitige Abdeckungen in der Form von Dächern aufweisen, welche ebenfalls jeweils durch eine oder mehrere Abstützungen abgestützt sind.

Es wird also die Tragestange des Daches durch arretierbare Hydraulikzylinder ausgebildet, welche durch die vorhandenen Hochdruck-Pumpeneinheiten angesteuert werden, und je nach Bedarf nach oben - in den Betriebszustand - oder nach unten - in den Verschlusszustand - verbracht werden. Die Anordnung der Hydraulikzylinder oder der entsprechenden, mittels anderer Technik ausgebildet Stützeinheiten ist dabei so gewählt, dass auch ein vollständiges Verschließen der Wachanlage durch Einklappen des Daches möglich ist.

Eine weitere Möglichkeit für den Antrieb der Steuerzylinder wäre die Verwendung von Wasser, welches ebenfalls inkompressibel ist und an Ort und Stelle vorhanden ist. Dies stellt jedoch nur eine weitere Ausführungsform einer entsprechenden Abstützung des Daches dar, welche jedoch sinngemäß dem Hydraulikzylinder oder der ebenfalls erwähnten Gewindespindel entspricht. Wesentlich bei der vorliegenden Erfindung ist jedoch die technische Lehre, dass das Dach entsprechend nach Bedarf noch hoch- oder heruntergeklappt werden kann. Die dazu verwendenden Mittel sind zwar ebenfalls wichtig, da sie ja die entsprechende Funktion übernehmen, entscheiden ist jedoch, die technische Lehre, dass die mobile Waschanlage durch das Einklappen des Daches verschlossen werden kann.

Durch die vorliegende Erfindung ergibt sich also der Vorteil gegenüber dem bisher bekannten Stand der Technik, dass die Selbstbedienungswaschanlagen ausserhalb der Betriebszeiten zu deren Schutz verschlossen werden können. Somit sind diese sowohl gegen Witterung als auch gegen Vandalismus in entsprechendem Rahmen geschützt, und der Betreiber der Waschanlage hat dadurch eine zusätzliche Sicherheit, dass seine Betriebsmittel nicht durch mutwillige Beschädigung in einen Zustand gebracht wurden, welcher unter Umständen eine Gefahr für den Bediener dahingehend darstellen, dass Hochdruckmedien aus beschädigten Bauteilen austreten und die Gesundheit des Anlagebenutzenden gefährden können. Zusätzlich ergibt sich natürlich noch der Vorteil, dass bei hoher Schneelast, welche sich beispielsweise über längere Zeitperioden des Nichtbetriebs durch starken Schneefall ergeben kann, das Dach und die Verstrebungen nicht unnötig belastet wird.

Ein weiterer Vorteil der sich daraus ergibt, liegt darin, dass die geschlossene Waschanlage nötigenfalls mit recht geringem Energieaufwand so weit beheizt werden kann, dass Frostschäden verhindert werden können, wodurch ebenfalls eine längere Haltbarkeit der gesamten Waschanlage gegeben ist.

Die Dachkonstruktion selbst kann dabei sowohl mit als auch ohne Stützstrebe ausgebildet sein. Der Vorteil bei der Ausbildung einer Stützstrebe liegt darin, dass das Dach an sich nicht selbst die entsprechenden Kräfte zur Abstützung aufnehmen muss, da diese durch die Stützstrebe abgefangen werden, zwingend erforderlich ist die Stützstrebe jedoch nicht.

Im folgenden wird die Erfindung anhand von einer, lediglich einen Ausführungsweg darstellenden Zeichnung näher erläutert. Es zeigt die Figur 1 eine Selbstbedienungswaschanlage mit erfindungsgemäßer Dachabstützung.

Die Figur 1 zeigt die erfindungsgemäße Dachabstützung für eine mobile Waschanlage 1 in der Ausführungsform mit jeweils einem Hydraulikzylinder 4, welche dazu geeignet sind, die jeweilige Dachseite 3 der mobilen Waschanlage 1 entweder auszufahren, also nach oben abzustützen, so dass Betriebseinheiten der Waschanlage 8, 10, 11 zugänglich werden, oder das Dach 3 nach unten zu klappen, so dass die Waschanlage 1 entsprechend verschlossen werden kann. Die Waschanlage 1 baut dabei im wesentlichen auf dem Portalrahmen 2 auf, an welchem über Schwenkachsen 5 die jeweilige Seite des Daches 3 schwenkbar angeordnet ist. Das jeweilige Dach 3 ist über Stützstellen 6 , 7 dachseitig bzw. portalrahmenseitig mittels einer längenverstellbaren Stützstrebe, in diesem Fall mit einem Hydraulikzylinder abgestützt. Durch entsprechenden Antrieb des Hydraulikzylinders wird der Kolben aufgefahren oder eingezogen, so dass dann jeweils das Dach entweder nach oben hin weggedrückt, wird bis es seine Betriebsstellung erreicht, oder im ungekehrten Fall, wird der Hydraulikzylinder eingefahren, so dass das Dach in seine zu fixierende Position gebracht werden kann. In dieser fixierten, geschlossenen Position ist dann die Waschanlage an der jeweiligen Seite verschlossen, so dass kein Zugang zu den Betriebseinheiten 8, 10, 11 und dergleichen mehr erfolgen kann.

In einer anderen Ausführungsform ist es vorgesehen, die längenverstellbare Stützstrebe durch eine Gewindestange mit einem entsprechendem Antrieb auszubilden. Funktions- bzw. Wirkungsweise ist dementsprechend die gleiche wie bei dem Hydraulikzylinder.

In einer anderen Ausführungsform ist es vorgesehen, mittels einer Zahnradverbindung, welche ebenfalls einen entsprechenden Antrieb aufweist, die Bewegung des Daches 3 hinsichtlich Öffnen bzw. Verschließen gegenüber dem Portalrahmen 2 auszubilden. Dazu kann es vorgesehen sein, das Dach zum Zwecke des Gewichtsausgleiches mit einem Gegengewicht auszubilden oder zu versehen. Somit kann dann die Bewegung des Öffnens des Daches 3 bzw. des Verschließens des Daches 3 deutlich energiesparender durchgeführt werden. Insgesamt wird an dieser Stelle jedoch nochmals darauf hingewiesen, dass es wesentlich ist, dass das Dach 3 zusammen mit dem Portalrahmen 2 mittels der längenverstellbaren Stützstreben 4 so gegeneinander verstellt werden kann, dass es zum Betriebszweck in geöffneter Position arretiert werden kann, und in Zeiten in welchen kein Betrieb vorgesehen das Dach mit dem Portalrahmen 2 so verschlossen werden kann, dass diese fest miteinander verschlossen sind. Dadurch sind die Einheiten der Waschanlage 8, 10, und 11 und dergleichen mehr entsprechend sowohl vor Witterung als auch vor mutwilliger Beschädigung, in Zeiten in denen kein Betrieb der mobilen Waschanlage vorgesehen ist, geschützt.

### Zeichnungslegende

- 1.: Waschanlage
- 2.: Portalrahmen
- 3.: Dach
- 4.: längenverstellbare Stützstrebe
- 5.: Schwenkachse
- 6.: Stützstelle
- 7.: Stützstelle
- 8.: Programmautomat
- 9.: Deckenkreisel
- 10.: H-D-Schlauch
- 11.: Sprühlanze

## Patentansprüche

1. Mobile Waschanlage (1) zur Aufnahme mindestens eines Fahrzeugs zu Reinigungszwecken, welche auf einem etwa horizontalen Fundamentboden anbringbar ist, bestehend aus einem Stahlgerüst aus Stahlträgern , an welchem Wandungen angebracht sind, wobei auf zwei sich gegenüberliegenden Seiten des Stahlgerüstes Öffnungen zum Ein- und Ausfahren der Fahrzeuge vorgesehen sind, wobei das die Waschanlage nach oben hin abschließende Dach an dem Stahlgerüst derart um mindestens eine Schwenkachse schwenkbar befestigt ist, **dadurch gekennzeichnet dass** dieses Dach aus einer etwa vertikalen Transportposition in eine etwa horizontale Benutzungsposition bringbar ist, und das Dach (3) durch wenigstens eine längenverstellbare Stützstrebe (4) verschwenkt werden kann.

2. Mobile Waschanlage nach Anspruch 1, **dadurch gekennzeichnet, dass** das Dach (3) im Betriebszustand der Waschanlage (1) so weit aufgeschwenkt werden kann, dass der Betrieb der Waschanlage (1) entsprechend gewährleistet ist.

3. Mobile Waschanlage nach Anspruch 1, **dadurch gekennzeichnet, dass** das Dach (3) so weit zugeschwenkt werden kann, dass dieses die Waschanlage (1) auf ihrer jeweiligen Seite entsprechend verschließt.

4. Mobile Waschanlage nach einem der Ansprüche 1 oder 3, **dadurch gekennzeichnet, dass** die Waschanlage (1) in verschlossenem Zustand vor Witterungseinflüssen und vor mutwilliger Beschädigung geschützt ist.

5. Mobile Waschanlage nach einem der Ansprüche 1, 3, 4, **dadurch gekennzeichnet, dass** die Waschanlage (1) im geschlossenen Zustand isolierend geschlossen ist.

6. Mobile Waschanlage nach einem der vorangehenden Ansprüche, **dadurch gekennzeichnet, dass** die längenverstellbaren Stützstreben als Hydraulikzylinder ausgebildet sind.

7. Mobile Waschanlage nach einem der vorangehenden Ansprüche, **dadurch gekennzeichnet, dass** die längenverstellbaren Stützstreben (4) als Gewindestange mit entsprechendem Antrieb ausgebildet sind.

8. Mobile Waschanlage nach einem der vorangehenden Ansprüche, **dadurch gekennzeichnet, dass** die Decke (3) über mindestens eine längenverstellbare Stützstrebe (4) abgestützt wird, welche an einer von der Schwenkachse (5) beabstandeten Stützstelle (6) an der Längsstrebe der Decke befestigt (3) ist.

9. Mobile Waschanlage nach einem der vorangehenden Ansprüche, **dadurch gekennzeichnet, dass** die mit einer Zahnradverbindung ausgebildete längenverstellbare Stützstrebe (4) mit entsprechendem Antrieb ausgestattet ist.

10. Mobile Waschanlage nach einem der vorangehenden Ansprüche, **dadurch gekennzeichnet, dass** das Dach (3) mit einem Gegengewicht ausgebildet ist.

## Claims

1. Mobile washing installation (1) for receiving at least one vehicle for cleaning purposes, which washing installation (1) can be provided on a substantially horizontal foundation base, consisting of a steel frame made of steel girders, on which walls are provided, openings being provided on two opposing sides of the steel frame for driving vehicles in and out, the roof closing the washing installation at the top being fastened to the steel frame so as to be pivotable about at least one pivot axis, **characterised in that** this roof can be brought from a substantially vertical transporting position into an approximately horizontal position of use, and the roof (3) can be pivoted by at least one length-adjustable support strut (4).

2. Mobile washing installation according to claim 1, **characterised in that** in the operating state of the washing installation (1), the roof (3) can be pivoted open to such an extent that operation of the washing installation (1) is correspondingly ensured.

3. Mobile washing installation according to claim 1, **characterised in that** the roof (3) can be pivoted closed to such an extent that it correspondingly closes the washing installation (1) on its respective side.

4. Mobile washing installation according to either of claims 1 or 3, **characterised in that** in the closed state, the washing installation (1) is protected from the influences of weather and from wilful damage.

5. Mobile washing installation according to any one of claims 1, 3, 4, **characterised in that** in the closed state, the washing installation (1) is closed in an insulating manner.

6. Mobile washing installation according to any one of the preceding claims, **characterised in that** the length-adjustable support struts are designed as hydraulic cylinders.

7. Mobile washing installation according to any one of the preceding claims, **characterised in that** the length-adjustable support struts (4) are designed as threaded rods with a corresponding drive.

8. Mobile washing installation according to any one of the preceding claims, **characterised in that** the cover (3) is supported via at least one length-adjustable support strut (4) which is fastened to a support point (6) on the longitudinal strut of the cover (3) spaced from the pivot axis (5).

9. Mobile washing installation according to any one of the preceding claims, **characterised in that** the length-adjustable support strut (4) designed with a toothed wheeled connection is equipped with a corresponding drive.

10. Mobile washing installation according to any one of the preceding claims, **characterised in that** the roof (3) is designed with a counter-weight.

## Revendications

1. Installation de lavage mobile (1) destinée à recevoir au moins un véhicule pour le nettoyer, apte à être montée sur un fondement à peu près horizontal et composée d'une structure métallique qui comprend des poutres métalliques et sur laquelle sont montées des parois, étant précisé que des ouvertures pour l'entrée et la sortie des véhicules sont prévues sur deux côtés opposés de la structure métallique, et que le toit qui ferme l'installation de lavage vers le haut est fixé à la structure métallique de manière à pouvoir pivoter autour d'au moins un pivot, **caractérisée en ce que** ce toit est apte à être amené d'une position de transport à peu près verticale à une position d'utilisation à peu près horizontale et le toit (3) peut pivoter grâce à au moins une jambe de force (4) réglable en longueur.

2. Installation de lavage mobile selon la revendication 1, **caractérisée en ce que** le toit (3), dans la position de fonctionnement de l'installation de lavage (1), peut pivoter suffisamment, en s'ouvrant, pour garantir en conséquence le fonctionnement de l'installation de lavage (1).

3. Installation de lavage mobile selon la revendication 1, **caractérisée en ce que** le toit (3) peut pivoter suffisamment, en se fermant, pour fermer en conséquence l'installation de lavage (1) sur le côté correspondant.

4. Installation de lavage mobile selon la revendication 1 ou 3, **caractérisée en ce qu'**en position fermée, elle est protégée des intempéries et du vandalisme.

5. Installation de lavage selon l'une des revendications 1, 3, 4, **caractérisée en ce qu'**en position fermée, elle est fermée de manière isolée.

6. Installation de lavage mobile selon l'une des revendications précédentes, **caractérisée en ce que** les jambes de force réglables en longueur sont conçues comme des vérins hydrauliques.

7. Installation de lavage mobile selon l'une des revendications précédentes, **caractérisée en ce que** les jambes de force (4) réglables en longueur sont conçues comme des tiges filetées avec un entraînement correspondant.

8. Installation de lavage mobile selon l'une des revendications précédentes, **caractérisée en ce que** le plafond (3) est en appui sur au moins une jambe de force (4) réglable en hauteur qui est fixée à l'étai longitudinal du plafond (3) au niveau d'un point d'appui (6) espacé du pivot (5).

9. Installation de lavage mobile selon l'une des revendications précédentes, **caractérisée en ce que** la jambe de force (4) réglable en longueur, conçue avec une liaison à roue dentée, est équipée d'un entraînement correspondant.

10. Installation de lavage mobile selon l'une des revendications précédentes, **caractérisée en ce que** le toit (3) est pourvu d'un contrepoids.
